# FASCICULE DE BREVET EUROPEEN

(11) **EP 2 338 351 B1**
(45) Date de publication et mention de la délivrance du brevet: **10.06.2020**
(21) Numéro de dépôt: 10193994.0
(22) Date de dépôt: 07.12.2010
(51) Int. Cl.: A23L 5/30, A23L 9/10, A23C 9/154, A23C 9/156, A23C 13/14

(54) **Produit lacté et procédé de préparation**
Milchprodukt und dessen Herstellungsverfahren
Dairy product and its process of manufacture

(30) Priorité: 08.12.2009 FR 0958739
(43) Date de publication de la demande: 29.06.2011
(73) Titulaire: LAITERIES HUBERT TRIBALLAT, F-18220 Les Aix D'Angillon (FR)
(72) Inventeur: Boudier, Patrick, 18220 RIANS (FR)
(74) Mandataire: Plasseraud IP

(56) Documents cités:
- EP-A1- 0 281 431
- EP-A1- 0 820 704
- EP-A1- 1 036 503
- EP-A1- 2 047 754
- FR-A1- 2 911 477
- Coquinaria.nl: "Crème brulée", , 29 avril 2008 (2008-04-29), XP002601906, Extrait de l'Internet: URL:http://web.archive.org/web/20080429083 851/http://www.coquinaria.nl/english/recip es/05.2histrecept.htm [extrait le 2010-09-21]
- DATABASE GNPD [Online] MINTEL; June 2006 (2006-06), Picard: "Crème Brûlée", Database accession no. 544111
- Anonymous: "Creme Anglaise Recipe & Photo - Joyofbaking.com", , 16 July 2008 (2008-07-16), pages 1-1, XP055652351, Retrieved from the Internet: URL:https://web.archive.org/web/2008071606 3640/https://www.joyofbaking.com/CremeAngl aise.html [retrieved on 2019-12-12]

## Description

La présente demande a pour objet un produit lacté, notamment un dessert lacté, ainsi qu'un procédé pour sa préparation.

Les desserts lactés disponibles sur le marché comprennent généralement du lait ou un produit laitier, une matière sucrante (notamment du saccharose), des œufs, ainsi que des additifs comme de la farine, de l'amidon ou dérivés, de la pectine, de l'agar agar ou des gommes telles la gomme de guar ou de xanthane. De tels additifs sont utilisés comme épaississants et/ou gélifiants, car ils assurent une bonne texture au dessert. En outre, certains de ces desserts comprennent des « marquants », comme des particules de vanille, visibles dans le produit fini. Les marquants sont répartis uniformément dans le dessert grâce à la présence des additifs de type épaississants et/ou gélifiants tels que mentionnés ci-dessus. En effet, ces composés, en assurant la texture et la viscosité adéquates, permettent le maintien des marquants en suspension dans le dessert, ce qui évite leur sédimentation. Des desserts avec ou sans inclusions, ainsi que leurs préparations, sont par exemple divulgués dans les documents EP0820704A1, EP2047754A1 et EP0281431A1.

Cependant, pour des raisons réglementaires, mais aussi afin d'éviter autant que possible la présence d'additifs alimentaires dans les produits, il existe un besoin de disposer de produits lactés, notamment de desserts lactés, comprenant des marquants répartis de manière homogène, et ce sans nécessiter l'utilisation de gélifiant et/ou épaississant. La présente invention permet, en outre, d'obtenir des produits lactés, notamment des desserts lactés, ayant une texture plus épaisse sans utiliser de gélifiant ou d'épaississant.

En particulier par exemple, si le dessert lacté est une crème brûlée, la dénomination « crème brûlée » exclut la présence de gélifiant selon la législation française (voir Lamy Dehove 376-320).

On a maintenant découvert qu'il est possible de préparer un dessert lacté, notamment une crème brûlée, qui ne présente pas de sédimentation des marquants, et ce sans ajouter de gélifiant ni d'épaississant.

La présente demande a donc pour objet un produit lacté, notamment un dessert lacté, comprenant des marquants et de la crème, lesdits marquants étant répartis de manière homogène et stable au sein dudit produit lacté en absence de gélifiant et/ou d'épaississant.

Le produit lacté, notamment le dessert lacté selon la demande présente une parfaite répartition des marquants, homogène et stable, ainsi qu'une texture satisfaisante, i.e. sans grumeaux ni exsudation notable ; et ce sans nécessiter la présence de gélifiant et/ou épaississant.

Par « marquant » au sens de la demande, on entend un composé qui, lorsqu'il est dispersé sous forme de particules dans un véhicule alimentaire avec lequel il n'est pas miscible, reste visible en tant que tel à l'œil nu. Aussi, les marquants du dessert lacté selon la demande sont des composés non miscibles avec ledit dessert et qui, lorsqu'ils sont dispersés sous forme de particules dans le dessert lacté, restent visibles à l'œil nu.

Par « gélifiant » au sens de la demande, on entend une substance qui, ajoutée à une denrée alimentaire, en augmente la consistance par la formation d'un gel.

Par « épaississant » au sens de la demande, on entend une substance qui, ajoutée à une denrée alimentaire, en augmente la viscosité.

Par « produit lacté » au sens de la demande, on entend un produit laitier (i.e. obtenu à partir de lait d'origine exclusivement animale) qui peut avoir un goût soit doux et sucré, soit salé. Les produits laitiers comprennent les produits fabriqués avec au moins 50% en poids par rapport au poids total du produit laitier, de lait entier, totalement ou partiellement écrémé et/ou de crème.

Par « dessert lacté » au sens de la demande, on entend un produit lacté au goût généralement doux et sucré. Par « dessert lacté frais », on entend un dessert lacté dont la durée de vie n'excède pas typiquement 30 jours.

Par « crème brûlée », on entend un dessert lacté obtenu par mélange de crème, de sucre et d'œufs, puis cuisson au four. Une telle composition comprend en outre en général des marquants, tels que notamment la vanille.

La répartition homogène et stable des marquants dans le produit lacté, tel que le dessert lacté selon la demande, est notamment due à une viscosité particulière du dessert. Cette viscosité est apportée par une pasteurisation du lait et/ou de la crème de départ suivie d'un procédé particulier d'homogénéisation sous pression. Ainsi, le produit lacté, notamment le dessert lacté selon la demande, ne requiert pas d'ajout de gélifiant et/ou épaississant.

Le produit lacté, notamment le dessert lacté selon la demande, ne contient pas de gélifiant et/ou d'épaississant en une quantité suffisante pour induire une viscosité ou une texture apte(s) à retenir les marquants en suspension homogène et stable. Généralement donc, le produit lacté, notamment le dessert lacté selon la demande comprend moins de 0.5% en poids par rapport au poids total du produit de gélifiant et épaississant, de préférence moins de 0.3% en poids, et plus préférentiellement moins de 0.1% en poids, et de préférence il en est totalement exempt.

Le dessert lacté selon la demande comprend des marquants, lesdits marquants étant répartis de manière homogène et stable au sein dudit dessert lacté, ledit dessert comprenant moins de 0.5% en poids, de préférence moins de 0.3% en poids, et plus préférentiellement moins de 0.1% en poids de gélifiant et d'épaississant par rapport au poids total du dessert de gélifiant et/ou épaississant, de préférence le dessert lacté est totalement exempt de gélifiant et d'épaississant.

La fermeté du produit lacté, notamment du dessert lacté, après traitement thermique (étape d) mentionnée ci-après) selon la demande est d'au moins 5g et de préférence inférieure à 400g car au-delà, le dessert lacté n'a plus la texture crémeuse recherchée. Avantageusement, la fermeté du dessert lacté après traitement thermique est comprise entre 5g et 80g pour un dessert lacté non cuit au four, et entre 80g et 250g pour un dessert lacté cuit au four.

Dans la présente demande, la fermeté du produit lacté, notamment du dessert lacté est mesurée, sauf indication contraire, selon le protocole suivant :
La fermeté du produit lacté, notamment du dessert lacté est mesurée avec un texturomètre TA.XT Express Enhanced, équipé d'un mobile cylindrique en plexiglas de 20 mm de diamètre. Le produit lacté est conservé dans un frigo à 4°C. Une fois le matériel prêt pour la mesure de la force du produit lacté, le produit est sorti du frigo, et tout de suite placé sous le mobile de manière à ce que la mesure soit effectuée en son centre.

Par ailleurs, le produit lacté, notamment le dessert lacté selon la demande présente une répartition homogène stable des marquants.

Par répartition homogène, on entend que les marquants sont uniformément dispersés (cette répartition uniforme étant déterminable à l'œil nu) dans le dessert lacté. Par répartition homogène stable, on entend que la dispersion des marquants reste uniforme pendant une durée d'au moins 30 jours, de préférence au moins 45 jours, à une température comprise entre 3 °C et 7°C.

Généralement, les ingrédients principaux du dessert lacté de la demande sont la crème, les marquants, le sucre et les œufs. Eventuellement des arômes peuvent être ajoutés. De préférence, lorsque le dessert lacté comprend des arômes, ces derniers sont naturels. Les arômes naturels sont des préparations acceptables pour la consommation humaine, obtenues exclusivement par des méthodes physiques, microbiologiques ou enzymatiques à partir de matières premières d'origine végétale ou animale, soit telles quelles, soit après transformation en vue d'une consommation humaine par des procédés traditionnels de préparation des aliments. A titre d'arômes naturels, on peut notamment citer l'arôme naturel de vanille, de café, de caramel, ou encore de fruits tels que les agrumes.

Le lait comprend une quantité d'au moins 0.1 % en poids de crème, de préférence au moins 4% en poids, et peut être utilisé sous la forme de lait totalement ou partiellement écrémé ou entier ; liquide, concentré, ou en poudre. On utilise de préférence du lait entier. Le lait est en outre d'origine exclusivement animale, et peut provenir de vache, de chèvre et/ou de brebis.

La crème peut être utilisée sous la forme de crème comprenant au moins 30% en poids de matière grasse, de préférence entre 35% et 45% en poids.

Préférentiellement, le dessert lacté selon la demande comprend de la crème à au moins 35% en poids de matière grasse.

Le sucre peut être du sucre de canne, de betterave, de palme ou issu de tout autre végétal. Il peut être liquide ou en poudre ; complet ou raffiné. Il peut notamment être choisi parmi le sucre semoule, le sucre glace, le sucre roux, la cassonade, le sirop de sucre inverti, la vergeoise, les sirops de glucose, les sirops de fructose et le fructose.

On peut également éventuellement ajouter des édulcorants intenses, tels que le stévioside, l'aspartame, l'acésulfame-K, la saccharine, le sucralose, ou encore les cyclamates.

Les œufs peuvent être utilisés tels quels, ou sous forme de préparations industrielles. Ces dernières peuvent être liquides ou en poudre ; on peut les utiliser telles quelles ou bien après dilution. Elles sont obtenues à partir d'œufs entiers, de blancs ou de jaunes d'œufs.

Le dessert lacté selon la demande peut également comprendre du chocolat.

De préférence, les marquants du dessert lacté selon la demande sont choisis, sans que cette liste soit limitative, parmi les poudres d'épices, les poudres de fruits à coque, les fruits confits en morceaux, les pépites de chocolat, les copeaux de chocolat, les fruits secs (éventuellement en morceaux), les fruits lyophilisés et les zestes d'agrume.

Les épices sont notamment la vanille, la réglisse, la cannelle, la menthe, la verveine, le thym ou le romarin. De préférence, l'épice est la vanille. Les poudres d'épices peuvent être obtenues à partir de différentes parties de l'épice.

De préférence, lorsque le marquant est la vanille, cette dernière est utilisée sous forme de broyat (issu du broyage de la gousse entière de vanille), ou en récupérant les grains.

Les fruits à coque sont notamment choisis parmi les noix, les noisettes, les pistaches, les amandes, les noix de cajou, les cacahuètes et les noix de Macadamia.

Les fruits secs sont notamment choisis parmi les raisins secs (par exemple de Corinthe ou de Malaga), les abricots secs, les dattes, les pruneaux et les figues sèches.

Les fruits lyophilisés sont notamment choisis parmi les fruits rouges, tels que les fraises ou les framboises.

Les zestes d'agrume sont notamment les zestes d'orange, de citron ou de pamplemousse.

Le dessert lacté selon la demande est choisi de préférence parmi les crèmes brûlées, les crèmes anglaises, les crèmes aux œufs, les œufs au lait, les mousses, les charlottes ou tout produit équivalent. Le dessert lacté selon la demande est choisi plus préférentiellement parmi les crèmes brûlées, les crèmes anglaises, les crèmes aux œufs, les œufs au lait et les charlottes. Plus préférentiellement, le dessert lacté selon la demande est une crème brûlée, comprenant de préférence comme marquants des grains de vanille et/ou des broyats de vanille.

Le produit lacté, notamment le dessert lacté selon la demande comprend de la crème en quantité comprise entre 10 et 80 % en poids par rapport au poids total du produit, et préférentiellement des marquants en quantité comprise entre 0,2 et 10% en poids, de préférence entre 0,2 et 5 % en poids par rapport au poids total du produit.

La présente invention a pour objet un procédé de préparation d'un dessert lacté tel que définit dans les revendications.

Le procédé de préparation du dessert lacté comprend les étapes suivantes :
a) on pasteurise la crème à une température comprise entre 90°C et 120°C pendant un temps compris entre 2 et 10 minutes ;
b) on soumet la crème chauffée de l'étape a) à une opération d'homogénéisation mécanique sous une pression supérieure ou égale à 100 bars, de préférence supérieure ou égale à 150 bars, et inférieure ou égale à 600 bars, de préférence comprise entre 150 et 400 bars ;
c) on mélange, à une température comprise entre 45 et 55°C, les marquants et éventuellement les autres ingrédients, de préférence les matières sucrantes et les œufs, avec la crème obtenue à l'étape b),
   les conditions de pasteurisation et d'homogénéisation étant choisies de telle manière que le mélange obtenu en fin d'étape c) ait une viscosité, mesurée selon le procotole indiqué ci-après, supérieure ou égale à 70 mPa.s (cP) et inférieure ou égale à 250 mPa.s (cP) à 70°C; puis
d) on fait subir au mélange un traitement thermique.

Le procédé de préparation du dessert lacté de l'invention comporte ainsi une étape a) de pasteurisation et une étape b) d'homogénéisation mécanique. On a constaté que ces étapes, associées à la présence des matières grasses présentes dans la crème, permettent de créer une texture suffisamment épaisse pour maintenir en suspension les marquants, et ce de façon stable et homogène.

L'étape a) est une étape de pasteurisation de la crème. Elle consiste en un chauffage de la crème à une température comprise entre 90°C et 120°C, de préférence comprise entre 90°C et 100°C, de préférence d'environ 95°C, pendant un temps compris entre 2 et 10 minutes, de préférence compris entre 3 minutes et 10 minutes, de préférence d'environ 5 minutes. Puis la crème est ensuite refroidie à une température de 2°C en une durée de lh30 environ, La crème est ensuite stockée à une température inférieure à 5°C. Cette étape de pasteurisation peut se faire grâce à tout appareil adapté, notamment de type échangeur à plaques.

Suite à la pasteurisation, la crème est homogénéisée sous haute pression. De préférence, l'étape b) d'homogénéisation mécanique est réalisée dans un homogénéisateur à deux étages. De tels appareils homogénéisateurs compriment le produit et le projettent à très grande vitesse sur des pièces mécaniques de forme particulière. On peut par exemple utiliser l'appareil MC4-5TBS, commercialisé sous la dénomination homogénéisateur GAULIN par la Société APV (France), dans lequel le fluide à homogénéiser est forcé sous pression élevée, par exemple de l'ordre de 100 bars à 600 bars. De préférence, l'homogénéisateur à deux étages présente au premier étage une pression comprise entre 50 et 350 bars, et une pression au deuxième étage égale à 50 bars. A l'entrée de l'appareil homogénéisateur, le produit est sous forme liquide, à une température pouvant aller par exemple de 50 à 60°C. De préférence, l'étape b) d'homogénéisation mécanique est réalisée à une température comprise entre 50°C et 60°C.
Suite à l'étape b), la crème obtenue est maintenue à une température comprise entre 50°C et 60°C, de préférence d'environ 55°C. Elle présente alors une viscosité comprise entre 150 mPa.s (cP) et 500 mPa.s (cP), de préférence comprise entre 250 mPa.s (cP) et 400 mPa.s (cP). La crème est mélangée avec les marquants, et éventuellement les autres ingrédients tels les matières sucrantes, les œufs et éventuellement les arômes (étape c)). Le mélange est effectué de préférence sous agitation lente, à une température comprise entre 50°C et 55°C, de préférence d'environ 50°C, pendant un temps suffisant pour que la préparation atteigne une viscosité comprise entre 70 mPa.s (cP) et 120 mPa.s (cP) à 70°C. L'agitation lente peut se faire avec 3 pâles de diamètre 310 de marque PMS, à une vitesse de 78 tours/minute.
Dans la présente demande, la viscosité d'une composition (la composition étant notamment la crème ou bien le mélange obtenu à la fin de l'étape c)) est mesurée, sauf indication contraire, selon le protocole suivant :
La viscosité est mesurée avec un viscosimètre Lamy RM100, équipé d'un corps de mesure MK-DIN 12. La composition est prélevée en pilulier, puis placée en bain marie afin de porter la composition à 70°C, température de la mesure. Une fois le mobile MK-DIN 12 plongé à mi-hauteur dans le pilulier, la mesure est effectuée avec un gradient de 88 sec⁻¹ pendant 30 secondes.
Enfin, le mélange obtenu à la fin de l'étape c) est soumis à un traitement thermique. Le traitement thermique peut consister en une cuisson, mais aussi en une congélation. La cuisson peut se faire en cuiseur dynamique (par exemple de type échangeur thermique qui peut être tubulaire ou à plaques), en cuve, au four ou à la vapeur.
De préférence, le traitement thermique consiste en une cuisson au four du mélange, de préférence dans un four à vapeur saturée, par exemple de type UNIBAND 615/004 de marque APV BAKER, à une température comprise entre 110 et 120°C pendant une durée comprise entre 25 et 35 minutes, de préférence d'environ 30 minutes. A ces températures, le cœur du mélange atteint une température d'environ 85°C.
A l'issue de cette opération, le dessert lacté de l'invention est refroidi à une température comprise entre 0 et 4°C, puis conditionné en vue de sa consommation.

Les exemples suivants illustrent l'invention sans toutefois la limiter. Sauf mention contraire, les pourcentages indiqués dans les exemples sont exprimés en poids par rapport au poids total de composition.

### EXEMPLE 1 : Crème brûlée

On utilise les ingrédients suivants:
- crème à 35% de matière grasse : 64.55%
- sucre : 11.1%
- jaune d'œuf liquide de mélange : 11.6%
- blanc d'œuf : 2%
- lait écrémé : 10%
- arôme vanille : 0.7%
- grains de vanille épuisés : 0.05%

On porte la température de la crème à 95°C et on maintient à cette température pendant 5 minutes.

Après refroidissement à une température de 55-60°C, et ajout du lait écrémé dans la cuve de mélange, on soumet cette base laitière (i.e. mélange crème + lait écrémé) à un traitement d'homogénéisation mécanique sous pression.

L'appareil utilisé pour l'homogénéisation est un appareil de type MC4-5TBS, commercialisé sous la dénomination homogénéisateur GAULIN par la Société APV (France). Grâce à cet appareil, le mélange est projeté sous forte pression (200 bars) sur une pièce métallique. L'homogénéisation exercée sur la base laitière se décompose en deux étages : un premier étage à 150 bars et un deuxième étage à 50 bars.

L'homogénéisation mécanique sous pression permet d'obtenir un produit très homogène, très lisse et de texture veloutée.

A l'issue de cette étape d'homogénéisation mécanique sous pression, on ajoute à la base laitière les blancs et les jaunes d'œufs, l'arôme de vanille et les grains de vanille épuisés préalablement incorporés au sucre sous agitation lente (agitateur de type 3 pâles de diamètre 310 de marque PMS, vitesse de rotation de 78 tours/minutes, agitation continue), jusqu'à ce que le mélange obtenu ait une viscosité de 100 mPa.s (cP) à 70°C.

La viscosité est mesurée comme indiqué dans la description.

Puis le mélange obtenu est cuit dans un four à vapeur saturée (four tunnel UNIBAND 615/004 de marque APV BAKER)) à une température de 110-120°C (de manière à obtenir 85°C à cœur) pendant 30 minutes, afin d'obtenir la crème brûlée.

La crème brûlée obtenue présente une répartition homogène stable des grains de vanille, et ce alors qu'elle ne contient ni gélifiant ni épaississant. Aucune sédimentation des grains de vanille n'est observée après une durée de 45 jours à 4 °C.

Par ailleurs, la crème brûlée obtenue présente une texture sans grumeau ni exsudation.

### EXEMPLE 2: Charlotte au chocolat et éclats de noisette

Recette de la crème au chocolat pour la charlotte :
- crème à 35% de matière grasse : 25%
- faisselle RIANS à 7% de matière grasse : 22,5%
- blanc d'œuf : 18,5%
- sucre : 13,5%
- beurre : 6%
- poudre de chocolat : 6%
- jaune d'œuf : 4%
- poudre de cacao : 2,5%
- éclats de noisette : 2.5%

On porte la température de la crème à 95°C et on maintient à cette température pendant 5 minutes.

Après refroidissement à une température de 55-60°C, la faisselle, le blanc d'œuf, le jaune d'œuf, le sucre, le beurre, les poudres de chocolat et de cacao sont ajoutés dans la cuve de mélange à 55°C. Ce mélange est soumis à un traitement d'homogénéisation mécanique sous pression.

L'appareil utilisé pour l'homogénéisation est un appareil de type MC4-5TBS, commercialisé sous la dénomination homogénéisateur GAULIN par la Société APV (France). Grâce à cet appareil, le mélange est projeté sous forte pression (300 bars) sur une pièce métallique. L'homogénéisation exercée sur la base laitière se décompose en deux étages : un premier étage à 250 bars et un deuxième étage à 50 bars.

L'homogénéisation mécanique sous pression permet d'obtenir un produit très homogène, très lisse et de texture veloutée.

A l'issue de cette étape d'homogénéisation mécanique sous pression, on ajoute les éclats de noisette sous agitation lente (de type 3 pâles de diamètre 310 de marque PMS avec une vitesse de rotation de 78 tours/minute, agitation en continu).

La viscosité est mesurée comme indiqué dans la description.

Avant l'homogénéisation, la viscosité du mélange est égale à 25 mPa.s (cP) à 70°C. Après homogénéisation, la viscosité du même mélange a été mesurée et est égale à 155 mPa.s (cP) à 70°C.

La préparation est dosée dans des pots plastiques où des kits biscuits cuillers ont été préalablement déposés.

Puis la charlotte obtenue est cuite dans un four à vapeur saturée (four tunnel UNIBAND 615/004 de marque APV BAKER) à une température de 83°C (de manière à obtenir 85°C à cœur) pendant 30 minutes, afin d'obtenir la charlotte au chocolat.

La charlotte au chocolat obtenue présente une répartition homogène stable des éclats de noisette, et ce alors qu'elle ne contient ni gélifiant ni épaississant. Aucune sédimentation des éclats de noisette n'est observée après une durée de 45 jours à 4 °C.

Par ailleurs, la charlotte au chocolat obtenue présente une texture sans grumeau ni exsudation.

## Revendications

1. Procédé de préparation d'un dessert lacté comprenant des marquants, de la crème en quantité comprise entre 10 et 80 % en poids par rapport au poids total du produit, du sucre, des œufs et éventuellement des arômes et contenant moins de 0,5% en poids par rapport au poids total du produit de gélifiant et d'épaississant choisi parmi la farine, l'amidon ou dérivés, la pectine, l'agar agar et les gommes, ledit procédé comprenant les étapes suivantes :
a) on pasteurise la crème à une température comprise entre 90°C et 120°C pendant un temps compris entre 2 et 10 minutes ;
b) on soumet la crème chauffée de l'étape a) à une opération d'homogénéisation mécanique sous une pression supérieure ou égale à 100 bars, de préférence supérieure ou égale à 150 bars, et inférieure ou égale à 600 bars, de préférence comprise entre 150 et 400 bars ;
c) on mélange, à une température comprise entre 45°C et 55°C, les marquants et éventuellement les autres ingrédients avec la crème obtenue à l'étape b),
les conditions de pasteurisation et d'homogénéisation étant choisies de telle manière que le mélange obtenu en fin d'étape c) ait une viscosité, mesurée selon le protocole indiqué dans la description, supérieure ou égale à 70 mPa.s (cP) et inférieure ou égale à 250 mPa.s (cP) à 70°C ; puis
d) on fait subir au mélange un traitement thermique.

2. Procédé selon la revendication 1 caractérisé en ce le dessert lacté est choisi parmi les crèmes brûlées, les crèmes anglaises, les crèmes aux œufs et les charlottes.

3. Procédé selon la revendication 2 **caractérisé en ce que** le dessert lacté est une crème brûlée et les marquants sont des grains de vanille et/ou broyats de vanille.

4. Procédé selon l'une des revendications 1 ou 3, **caractérisé en ce que** l'étape b) d'homogénéisation mécanique est réalisée dans un homogénéisateur à deux étages.

5. Procédé selon l'une des revendications 1 à 4, **caractérisé en ce que** l'étape b) d'homogénéisation mécanique est réalisée à une température comprise entre 50°C et 60°C.

6. Procédé selon l'une des revendications 1 à 5, **caractérisé en ce qu'**à l'étape c) on mélange les marquants et éventuellement les autres ingrédients avec la crème obtenue à l'étape b), jusqu'à ce que le mélange obtenu ait une viscosité comprise entre 70 mPa.s (cP) et 120 mPa.s (cP) à 70°C.

7. Procédé selon l'une des revendications 1 à 6, **caractérisé en ce que** le traitement thermique de l'étape d) consiste en une cuisson au four du mélange, de préférence dans un four à vapeur saturée, à une température comprise entre 110 et 120°C pendant une durée comprise entre 25 et 35 minutes.

## Patentansprüche

1. Verfahren zur Herstellung eines Milchdesserts, umfassend Marker, Sahne in einer Menge zwischen 10 und 80 Gewichts-% bezogen auf das Gesamtgewicht des Produkts, Zucker, Eier und gegebenenfalls Aromen und enthaltend weniger als 0,5 Gewichts-%, bezogen auf das Gesamtgewicht des Produkts, Geliermittel und Verdickungsmittel ausgewählt aus Mehl, Stärke oder Derivate, Pektin, Agar-Agar und den Gummis, wobei das Verfahren die folgenden Schritte umfasst:
a) Pasteurisieren der Sahne bei einer Temperatur zwischen 90 °C und 120 °C für eine Zeit zwischen 2 und 10 Minuten;
b) Aussetzen der erhitzten Sahne aus dem Schritt a) einem mechanischen Homogenisierungsvorgang unter einem Druck von mehr als oder gleich 100 bar, vorzugsweise mehr als oder gleich 150 bar und weniger als oder gleich 600 bar, vorzugsweise zwischen 150 und 400 bar;
c) Mischen der Marker und gegebenenfalls der anderen Bestandteile mit der in Schritt b) erhaltenen Sahne bei einer Temperatur zwischen 45 °C und 55 °C,
wobei die Pasteurisierungs- und Homogenisierungsbedingungen so gewählt sind, dass die am Ende von Schritt c) erhaltene Mischung eine Viskosität, gemessen gemäß dem in der Beschreibung angegebenen Protokoll, von größer als oder gleich 70 mPa.s (cP) und weniger als oder gleich 250 mPa.s (cP) bei 70°C aufweist; dann
d) Unterzeihen der Mischung einer Wärmebehandlung.

2. Verfahren nach Anspruch 1, **dadurch gekennzeichnet, dass** das Milchdessert ausgewählt ist aus Cremes Brûlées, Cremes Anglaises, Eiercremen und Charlotten.

3. Verfahren nach Anspruch 2, **dadurch gekennzeichnet, dass** das Milchdessert eine Creme Brûlée ist und die Marker Vanilleschoten und/oder Vanillepulver sind.

4. Verfahren nach einem der Ansprüche 1 oder 3, **dadurch gekennzeichnet, dass** der Schritt b) einer mechanischen Homogenisierung in einem zweistufigen Homogenisator durchgeführt wird.

5. Verfahren nach einem der Ansprüche 1 bis 4, **dadurch gekennzeichnet, dass** der Schritt b) einer mechanischen Homogenisierung bei einer Temperatur zwischen 50 °C und 60°C durchgeführt wird.

6. Verfahren nach einem der Ansprüche 1 bis 5, **dadurch gekennzeichnet, dass** in Schritt c) die Marker und gegebenenfalls die anderen Bestandteile mit der in Schritt b) erhaltenen Sahne gemischt werden, bis die erhaltene Mischung eine Viskosität zwischen 70 mP.s (cP) und 120 mP.s (cP) bei 70°C aufweist.

7. Verfahren nach einem der Ansprüche 1 bis 6, **dadurch gekennzeichnet, dass** die Wärmebehandlung von Schritt d) darin besteht, die Mischung im Ofen, vorzugsweise in einem Ofen mit gesättigtem Dampf, bei einer Temperatur zwischen 110 und 120°C für eine Dauer zwischen 25 und 35 Minuten zu backen.

## Claims

1. A method for preparing a dairy dessert comprising markers, cream in an amount comprised between 10 and 80% by weight relative to the total weight of the product, sugar, eggs and optionally flavourings and containing less than 0.5% by weight relative to the total weight of the gelling and thickening product selected from flour, starch or derivatives, pectin, agar-agar and gums, said method comprising the following steps:
a) the cream is pasteurised at a temperature comprised between 90°C and 120°C for a time comprised between 2 and 10 minutes;
b) the heated cream from step a) is subjected to a mechanical homogenisation operation under a pressure greater than or equal to 100 bars, preferably greater than or equal to 150 bars, and less than or equal to 600 bars, preferably comprised between 150 and 400 bars;
c) the markers and optionally the other ingredients are mixed, at a temperature comprised between 45°C and 55°C, with the cream obtained in step b),
the pasteurisation and homogenisation conditions being selected so that the mixture obtained at the end of step c) has a viscosity, measured according to the protocol indicated in the description, greater than or equal to 70 mPa.s (cP) and less than or equal to 250 mPa.s (cP) at 70°C; then
d) the mixture is subjected to a heat treatment.

2. The method according to claim 1 **characterised in that** the dairy dessert is selected from creme brulee, custards, egg creams and charlottes.

3. The method according to claim 2 **characterised in that** the dairy dessert is a creme brulee and the markers are vanilla beans and/or crushed vanilla.

4. The method according to one of claims 1 or 3, **characterised in that** step b) of mechanical homogenisation is carried out in a two-stage homogeniser.

5. The method according to one of claims 1 to 4, **characterised in that** step b) of mechanical homogenisation is carried out at a temperature comprised between 50°C and 60°C.

6. The method according to one of claims 1 to 5, **characterised in that** in step c) the markers and optionally the other ingredients are mixed with the cream obtained in step b), until the mixture obtained has a viscosity comprised between 70 mPa.s (cP) and 120 mPa.s (cP) at 70°C.

7. The method according to one of claims 1 to 6, **characterised in that** the heat treatment of step d) consists in baking the mixture in the oven, preferably in a saturated steam oven, at a temperature comprised between 110 and 120°C for a period comprised between 25 and 35 minutes.
